# EUROPÄISCHE PATENTANMELDUNG

(11) **EP 1 221 804 A2**
(43) Veröffentlichungstag der Anmeldung: **10.07.2002**
(21) Anmeldenummer: 01130790.7
(22) Anmeldetag: 22.12.2001
(51) Int. Cl.: H04M 3/533

(54) **Verfahren und Vorrichtung zur Weiterleitung von Sprachspeichernachrichten**

(30) Priorität: 04.01.2001 DE 10100162
(71) Anmelder: Tenovis GmbH & Co. KG, 60326 Frankfurt am Main (DE)
(72) Erfinder: Artun, Berkan, 64293 Darmstadt (DE); Wagner, Joachim, 35625 Hüttenberg (DE)
(74) Vertreter: Patentanwaltskanzlei WILHELM & BECK

(57) **Zusammenfassung**

Die Erfindung betrifft ein Verfahren zur Weiterleitung von Sprachspeichernachrichten, wobei eine Sprachnachricht als Sprachspeichernachricht in einem Sprachspeicher (2) gespeichert wird. Die Sprachspeichernachricht wird in ein Datenpaket umgewandelt und das Datenpaket an ein Endgerät weitergeleitet. Die erfindungsgemäße Vorrichtung zur Weiterleitung einer Sprachnachricht weist einen Sprachspeicher (2) auf, um die Sprachnachricht als eine Sprachspeichernachricht zu speichern und weiterhin eine Weiterleitungseinheit (5) zum Senden des Datenpaket an ein Endgerät auf. Die Vorrichtung umfasst eine mit dem Sprachspeicher (2) verbundene Codiereinheit (3) zur Umwandlung der Sprachspeichereinheit in ein Datenpaket, wobei die Codiereinheit (3) mit einer Steuereinheit (4) zum Steuern der Codiereinheit (3) gemäß einer Vorschrift verbunden ist.

## Beschreibung

Die Erfindung betrifft ein Verfahren und eine Vorrichtung zur Weiterleitung von Sprachspeichernachrichten, insbesondere als E-Mail-Nachricht.

Heutige Telefonanlagen ermöglichen es dem Benutzer bei Abwesenheit einen Sprachspeicher zu aktivieren. Anrufer können dort Nachrichten z.B. in Form von Sprache hinterlassen. Diese Nachrichten werden zentral gespeichert und können dann vom Benutzer abgehört werden. Hierzu muss der Benutzer eine Verbindung zu diesem Sprachspeicher herstellen. Dem Benutzer werden dabei in akustischer Form die Sprachnachrichten nacheinander präsentiert, ohne dass er zunächst weiß, von wem die Nachricht hinterlassen worden ist oder welchen Umfang die Nachricht hat.

Dass eine Nachricht hinterlassen worden ist, wird dem Benutzer üblicherweise überhaupt nicht, bzw. nur durch das angerufene Endgerät, z. B. durch eine daran befindliche Anzeigeeinrichtung mitgeteilt. Befindet sich der Benutzer nicht am Ort des Endgeräts, so erfährt er üblicherweise nicht, ob ein Anruf eingegangen ist. Er hat lediglich die Möglichkeit, eine Verbindung zu dem Sprachspeicher aufzubauen, um zu erfahren, ob eine Sprachnachricht hinterlassen worden ist.

Es ist Aufgabe dieser Erfindung, ein Verfahren vorzusehen, mit dem dem Benutzer Sprachnachrichten einfacher zugänglich gemacht werden können und der Benutzer auf den Eingang einer Sprachnachricht aufmerksam gemacht wird.

Diese Aufgabe wird durch das Verfahren nach Anspruch 1 und die Vorrichtung nach Anspruch 16 gelöst.

Erfindungsgemäß ist ein Verfahren und eine Vorrichtung zur Weiterleitung von Sprachspeichernachrichten vorgesehen, wobei eine Sprachnachricht als Sprachspeichernachricht in einem Sprachspeicher gespeichert wird. Die Sprachspeichernachricht wird in ein Datenpaket umgewandelt und das Datenpaket automatisch weitergeleitet.

Das Verfahren hat den Vorteil, dass ein Empfänger einer Sprachnachricht nicht mehr selbst, d.h. von eigener Initiative ausgehend, die Verbindung zu dem Sprachspeicher herstellen muss, um die für ihn bestimmte Sprachnachricht zu empfangen. Vielmehr wird die Sprachspeichernachricht zu einem Endgerät nach Wahl des Benutzers weitergeleitet. Ein solches Endgerät ist vorzugsweise geeignet, das Datenpaket zu speichern und/oder auszugeben. Weiterhin hat der Benutzer den Vorteil, dass ihn die Sprachnachricht sofort zur Verfügung stehen, z.B. als E-Mail in einem E-Mail-System, da ihm die Sprachspeichernachricht an ein ausgewähltes Endgerät nachgesendet wird. Eine Bearbeitung der Sprachenachricht z. B. in einer Vermittlungsanlage oder im Sprachspeichersystem ist nicht weiter erforderlich.

Gemäß einer bevorzugten Ausführungsform kann vorgesehen sein, dass das Datenpaket an mehrere Endgeräte weitergeleitet wird. Dies können z. B. Endgeräte für mehrere E-Mail-Adressen sein und/oder Sprach- oder Textnachrichtenspeicher in Mobilfunkgeräten usw. Auf diese Weise ist es möglich, dass bei Unkenntnis des aktuellen Orts des Benutzers die Nachricht an mehrere mögliche Endgeräte entsprechend den möglichen Aufenthaltsorten weiterverschickt wird. So ist gewährleistet, dass der Benutzer schnellstmöglich die Nachricht erhält. Es ist auch denkbar, dass die Sprachnachricht für mehrere, verschiedene Benutzer bestimmt ist, so dass die Sprachnachricht gemäß einer Verteilerliste versendet wird.

Um den Speicherbedarf des zentralen Sprachspeicher zu reduzieren und um Missbrauch durch Abhören der Sprachdaten durch eine unbefugte dritte Person, die Zugang zu dem Sprachspeicher erlangt hat, vorzubeugen, kann die Sprachspeichernachricht direkt nach dem Weiterleiten als Datenpaket aus dem Sprachspeicher gelöscht werden, so dass die Sprachnachricht nur noch als Datenpaket im adressierten Endgerät vorhanden ist. Das Löschen kann beispielsweise nach Eingang einer Empfangsbestätigung im Sprachspeichersystem erfolgen.

Das Datenpaket wird vorzugsweise mit Hilfe eines geeigneten Komprimierungsverfahren aus der Sprachspeichernachricht erzeugt, um die Datenmenge, die aus dem Sprachspeicher weitergeleitet werden soll, zu reduzieren. Das Komprimierungsverfahren kann beispielsweise eine Sprach-zu-Text-Umwandlung sein, die es ermöglicht, in einem Sprachspeicher gespeicherte Sprachnachrichten durch Spracherkennung in einen Text umzuwandeln, der dann an ein E-Mail-System bzw. ein Kurznachrichtensystem eines Mobilfunkgerätes weitergeleitet werden kann. Dies stellt eine erhebliche Reduzierung der weitergeleiteten Datenmenge dar, wodurch auch Datenübertragungswege mit geringem Datendurchsatz oder Endgeräte mit geringere Speichervolumen als Endgeräte verwendet werden können.

Zusätzlich kann das Weiterleiten gemäß einer Vorschrift erfolgen. Diese Vorschrift kann beispielsweise eine Zeitsteuerung sein oder das Weiterleiten kann gemäß des Absenders der Sprachnachricht an verschiedene Endgeräte erfolgen.

Gemäß einer bevorzugten Ausführungsform kann eine Vorrichtung zum Weiterleiten einer Sprachnachricht vorgesehen sein. Die Vorrichtung umfasst einen Sprachspeicher, um die Sprachnachricht als eine Sprachspeichernachricht zu speichern und eine Codiereinheit, die mit dem Sprachspeicher verbunden ist. Die Codiereinheit, dient zur Umwandlung der Sprachspeichernachricht in ein Datenpaket. Die Codiereinheit ist weiterhin mit einer Steuereinheit zum Steuern der Codiereinheit gemäß einer Vorschrift verbunden. Ebenfalls ist eine Weiterleitungseinheit vorgesehen, um ein Endgerät zu adressieren und das Datenpaket an das Endgerät zu senden.

Eine besondere Ausführungsform der Erfindung wird im folgenden anhand der Figuren näher erläutert. Es zeigen:
Fig. 1 ein Blockschaltbild eines Weiterleitungssystems; und
Fig. 2 ein Ablaufdiagramm für das erfindungsgemäße Verfahren zur Weiterleitung von Sprachnachrichten.

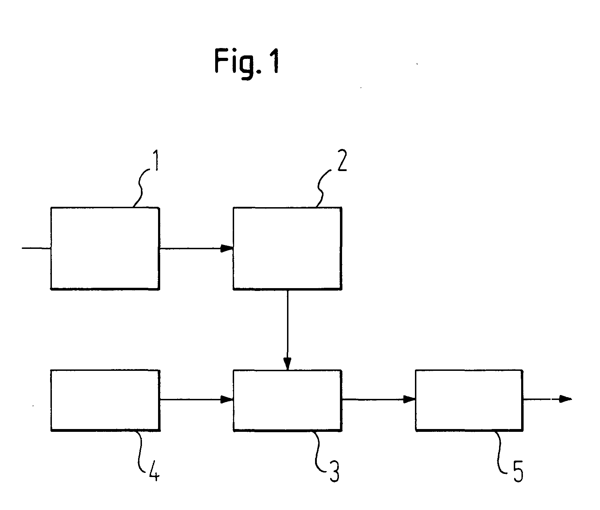

Eine mögliche Ausführungsform ist in Fig. 1 gezeigt. Fig. 1 zeigt ein Blockschaltbild eines Weiterleitungssystems für Sprachnachrichten in z.B. einer Telefonanlage. Das Weiterleitungssystem weist ein Vermittlungssystem 1 auf, in dem eingehende Anrufe empfangen werden. Je nachdem vom Anrufer gewünschtem Empfänger für die Nachricht leitet das Vermittlungssystem 1 den eingehenden Anruf auf das dem Empfänger zugeordnete Telefongerät (nicht gezeigt) weiter. Nimmt der Empfänger den eingehenden Anruf nicht an, so wird der Anrufer an einen Sprachspeicher 2, der mit dem Vermittlungssystem 1 verbunden ist, weitergeleitet. Alternativ kann gemäß einer Ausführungsform der Erfindung der eingehende Anruf auch direkt an den Sprachspeicher 2 weitergeleitet werden, wenn der Empfänger nicht gestört sein will oder sich nicht am Ort des Telefonendgeräts aufhält.

In dem Sprachspeicher 2 werden die Sprachnachrichten durch das Vermittlungssystem 1 als Sprachspeichernachrichten gespeichert. Der Sprachspeicher 2 ist mit einer Codiereinheit 3 verbunden, die die im Sprachspeicher 2 gespeicherten Sprachspeichernachrichten in Datenpakete codiert. An die Codiereinheit 3 ist eine Steuereinheit 4 angeschlossen, die einstellbare Vorschriften für das Weiterleiten der Sprachnachrichten enthält. Die Steuereinheit 4 kann dafür einen Vorschriftenspeicher umfassen. Die Codiereinheit 3 ist mit einer Weiterleitungseinheit 5 verbunden, die die codierten Datenpakete gemäß der von der Steuereinheit 4 vorgegebenen Vorschrift an Endgeräte weiterleitet. Die Weiterleitungseinheit 5 kann beispielsweise ein E-Mail-Server sein, der das Datenpaket in eine E-Mail integriert, wobei die E-Mail-Adresse des Endgeräts durch die Vorschrift in der Steuereinheit 4 gegeben ist. Diese Vorschrift kann z.B. vorsehen, dass die Telefonnummer des Anrufers einer bestimmten Weiterleitungs-Email-Adresse zugeordnet ist.

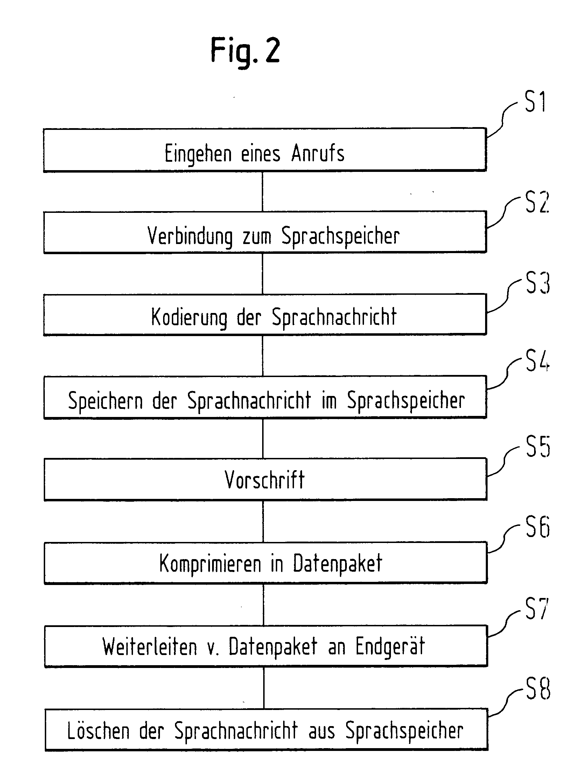

Fig. 2 zeigt ein Ablaufdiagramm für eine Ausführungsform des erfindungsgemäßen Verfahrens zur Weiterleitung von Sprachspeichernachrichten. Bei Eingehen eines Anrufs in einer Telefonanlage (Schritt S1) wird im Fall, dass der Empfänger den Anruf nicht annimmt, weil er sich beispielsweise nicht an dem Ort des Telefons aufhält, oder weil er ungestört sein möchte, an einen Sprachspeicher weitergeleitet (Schritt S2). Alternativ kann der Anrufer sofort automatisch an den Sprachspeicher weitergeleitet werden oder den Sprachspeicher des Empfängers auch direkt anrufen, ohne dass die Telefonanlage den eingehenden Anruf dorthin weiterleiten muss. Nach einer akustischen Aufforderung erhält der Anrufer die Möglichkeit, eine Sprachnachricht zu hinterlassen. Die Mitteilung des Anrufers wird aufgezeichnet, codiert (Schritt S3) und im Sprachspeicher als Sprachspeichernachricht abgespeichert.

Die Codierung der Sprachnachricht in Schritt S3 erfolgt vorzugsweise mit einem Codierungsverfahren, bei dem die Sprachnachricht einen möglichst geringen Speicherbedarf im Sprachspeicher benötigt. Es sollte sich dabei vorzugsweise aber um ein Codierungsverfahren handeln, das es verhältnismäßig einfach und schnell ermöglicht, die Sprachnachricht zu decodieren, so dass der Benutzer durch einen Anruf der Telefonanlage die Sprachnachricht aus dem Sprachspeicher wieder abrufen kann, ohne größere Wartezeiten zu haben.

In Schritt S5 werden Vorschriften geprüft, wie mit der im Sprachspeicher gespeicherten Sprachnachricht zu verfahren ist. Diese Vorschriften können unter Berücksichtigung von Parametern der Sprachnachricht, wie die Länge der Nachricht, der Absender, die Uhrzeit des Eingangs usw., unterschiedlich sein. Dort kann beispielsweise vorgesehen sein, jede eingehende Sprachnachricht sofort an ein durch die Vorschrift bestimmtes Endgerät weiterzuleiten.

Vor dem Weiterleiten wird die Sprachspeichernachricht in ein Datenpaket komprimiert (Schritt S6). Das Komprimieren in ein Datenpaket erfolgt mit Hilfe eines geeigneten Komprimierungsverfahren. So kann dafür beispielsweise ein G.729-Codierverfahren (ITU Standard) verwendet werden. Ferner kann auch die Verwendung eines Spracherkennungsverfahrens sinnvoll sein, wodurch die eingegebene Sprachnachricht in einen Text umgewandelt werden kann. Da die Umwandlung von Sprache zu Text eine sehr starke Datenreduktion darstellt, ist dieses Komprimierverfahren besonders geeignet für die Weiterleitung der Sprachspeichernachricht in Form einer E-Mail, einer Fax-Nachricht in Form einer Kurzmitteilung an ein Mobilfunkgerät. Selbstverständlich ist es auch möglich, dass das Datenpaket Sprachdaten in komprimierter Form enthält, die z.B. als Anlage einer E-Mail verschickt werden kann.

Die komprimierten Daten werden anschließend als Datenpaket an das vorbestimmte Endgerät weitergeleitet (Schritt S7). Dies kann über alle möglichen Übertragungswege, wie Mobilfunk, Telefonkabel o.ä. erfolgen.

Gemäß einem optionalen Merkmal kann es vorgesehen sein, dass die Sprachspeichernachricht aus dem Sprachspeicher gelöscht wird, sobald sie an das Endgerät weitergeleitet worden ist (Schritt S8). Auf diese Weise kann der notwendige Speicherbedarf für den Sprachspeicher reduziert werden, was insbesondere bei einem zentralen Sprachspeicher für mehrere Teilnehmeranschlüsse sinnvoll ist, um Speicherplatz einzusparen. Das Löschen der Sprachnachricht aus dem zentralen Sprachspeicher kann optional erst dann vorgenommen werden, wenn der Sprachspeicher eine Empfangsbestätigung für den Eingang des Datenpakets im Endgerät erhalten hat. Diese Empfangsbestätigung kann manuell oder automatisch generiert und versendet werden.

Die mit Bezug auf Schritt S5 vorgesehene Vorschrift bietet ein weiteres Spektrum an Funktionalitäten. So kann vorgesehen sein, dass die Nachricht im Sprachspeicher an mehrere Endgeräte weitergeleitet wird. Demnach kann beispielsweise die Sprachnachricht gemäß einem Verteiler mehreren Empfängern gesendet werden, so dass die Sprachnachricht des Anrufers mehreren Personen zugänglich gemacht wird.

Eine weitere Vorschrift ist, dass die Sprachspeichernachricht gemäß einer Zeitsteuerung zu bestimmten Uhrzeiten als Datenpaket an ein bestimmtes Endgerät weitergeleitet wird und zu anderen Uhrzeiten an ein zweites Endgerät weitergeleitet wird, und entsprechend der Art des jeweiligen Endgerätes kann das Komprimierverfahren für die Sprachspeichernachricht ausgewählt werden. Auf diese Weise ist es möglich, dass der Benutzer gemäß einem vorbestimmten Zeitplan die Mitteilung an mehreren Orten erhalten kann, an denen er sich gerade aufhält.

Es kann weiterhin vorgesehen sein, dass die Vorschrift abhängig vom Absender, der beispielsweise durch eine Rufnummern-Erkennung, durch Eingabe eines Identifizierungscodes und/oder einer Sprachprobe usw. festgestellt werden kann, die Sprachspeichernachricht an verschiedene Endgeräte weitergeleitet wird. So kann beispielsweise vorgesehen sein, dass private Anrufe, die durch eine Rufnummern-Erkennung, Identifizierungscode usw. festgestellt werden, an einen privaten E-Mail-Count gesendet werden, während Sprachnachrichten von Arbeitskollegen oder Kunden mit z. B. geschäftlichen Inhalt an die Geschäfts-E-Mail-Adresse weitergeleitet werden.

Gemäß einem weiteren Merkmal kann vorgesehen sein, dass die Sprachnachricht von Anrufern mit einer Dringlichkeitsstufe versehen werden kann, und dass die Vorschrift die Sprachnachricht je nach Dringlichkeitsstufe unterschiedlich behandelt. So können beispielsweise nur Sprachnachrichten mit höchster Dringlichkeitsstufe versendet werden, während niedrigere Priorität im Sprachspeicher gespeichert bleiben, ohne dass sie versendet werden. Diese werden dann bei einem Löschbefehl vorzugsweise nicht aus dem Sprachspeicher entfernt.

Ferner kann vorgesehen sein, dass der Benutzer in der Lage ist, die Sprachspeichernachricht im Sprachspeicher aktiv abzurufen. Dazu stellt der Benutzer eine Verbindung mit dem Sprachspeicher her und kann dann z.B. menügeführt alle oder einen Teil der Sprachspeichernachrichten abrufen. Der Zugang zum Sprachspeicher sollte dabei durch eine Zugangsberechtigungsprüfung erfolgen, so dass nur der Benutzer und/oder weitere berechtigte Personen die Sprachspeichernachrichten empfangen können. So könnte beispielsweise ein Benutzer mit seinem Mobilfunkgerät durch eine Kurzmitteilung an den Sprachspeicher, die beispielsweise einen Zugangsberechtigungscode umfasst, den Sprachspeicher anweisen, die gespeicherten Sprachspeichernachricht an das Mobilfunkgerät weiterzuleiten. Dies kann beispielsweise nach einer Umwandlung in einen Text erfolgen, wobei dann das Mobilfunkgerät die Sprachnachrichten in Form einer Kurzmitteilung, z. B. SMS, erhält. Ist das Datenpaket mit der codierten Sprachspeichernachricht zu groß, um als eine SMS-Nachricht versendet zu werden, so kann das Datenpaket in mehreren Text-Teilen als mehrere SMS-Nachrichten versendet werden.

Es kann weiterhin vorgesehen sein, dass die Vorschriften zur Behandlung der Sprachspeichernachricht von externer Seite, d.h. von außerhalb der Telefonanlage vorgegeben werden können, und durch Fernzugriff auf das Sprachspeichersystem geändert werden können. Dies kann vorzugsweise nach einer Zugangsberechtigungsprüfung erfolgen.

Die in der vorangehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausgestaltungen wesentlich sein.

### Bezugszeichenliste

- 1: Vermittlungssystem
- 2: Sprachspeicher
- 3: Codiereinheit
- 4: Steuereinheit
- 5: Weiterleitungseinheit

## Patentansprüche

1. Verfahren zur Weiterleitung von Sprachspeichernachrichten, wobei eine Sprachnachricht als Sprachspeichernachricht in einem Sprachspeicher (2) gespeichert wird,
**dadurch gekennzeichnet,**
**dass** die Sprachspeichernachricht in ein Datenpaket umgewandelt wird, und das Datenpaket automatisch weitergeleitet wird.

2. Verfahren nach Anspruch 1, **dadurch gekennzeichnet, dass** die Sprachnachricht gemäß einem Codierverfahren im Sprachspeicher (2) abgelegt wird.

3. Verfahren nach Anspruch 2, **dadurch gekennzeichnet, dass** das Datenpaket an ein oder mehrere Endgeräte zum Speichern und/oder Ausgeben des Datenpakets weitergeleitet wird.

4. Verfahren nach einem der vorangehenden Ansprüche, **dadurch gekennzeichnet, dass** die Sprachspeichernachricht nach dem Weiterleiten aus dem Sprachspeicher (2) gelöscht wird.

5. Verfahren nach einem der vorangehenden Ansprüche, **dadurch gekennzeichnet, dass** die Sprachspeichernachricht durch Herstellen einer Verbindung mit dem Sprachspeicher (2) von dem Sprachspeicher (2) abgefragt werden kann.

6. Verfahren nach Anspruch 5, **dadurch gekennzeichnet, dass** das Herstellen der Verbindung mit dem Sprachspeicher (2) nach einer Zugangsberechtigungsprüfung erfolgt.

7. Verfahren nach einem der vorangehenden Ansprüche, **dadurch gekennzeichnet, dass** bei dem Umwandeln das Datenpaket gemäß einem Komprimierverfahren aus der Sprachspeichernachricht erzeugt wird.

8. Verfahren nach Anspruch 7, **dadurch gekennzeichnet, dass** das Komprimierverfahren ein G.729-Codierverfahren ist.

9. Verfahren nach Anspruch 7, **dadurch gekennzeichnet, dass** das Komprimierverfahren eine Sprach-zu-Text-Umwandlung ist.

10. Verfahren nach Anspruch 9, **dadurch gekennzeichnet, dass** das Endgerät ein Mobilfunkgerät ist, das das Datenpaket in Form einer Kurzmitteilung erhält.

11. Verfahren nach einem der Ansprüche 1 bis 9, **dadurch gekennzeichnet, dass** das Weiterleiten an das Endgerät über ein E-Mail-System erfolgt, so dass das Datenpaket in Form einer E-Mail empfangen werden kann.

12. Verfahren nach einem der vorangehenden Ansprüche, **dadurch gekennzeichnet, dass** das Datenpaket gemäß einer Vorschrift zur Behandlung des Datenpakets weitergeleitet wird.

13. Verfahren nach Anspruch 12, **dadurch gekennzeichnet, dass** die Vorschrift eine Zeitsteuerung umfasst.

14. Verfahren nach Anspruch 12 oder 13, **dadurch gekennzeichnet, dass** das Datenpaket an ein durch die Vorschrift bestimmtes Endgerät weitergeleitet wird.

15. Verfahren nach einem der Ansprüche 12 bis 14, **dadurch gekennzeichnet, dass** ein Erkennen des Absenders der Sprachnachricht durchgeführt wird, wobei die Vorschrift das Datenpaket abhängig von dem Absender der Sprachnachricht weiterleitet.

16. Vorrichtung zum Weiterleiten einer Sprachnachricht in einem Vermittlungssystem mit einem Sprachspeicher (2), um die Sprachnachricht als eine Sprachspeichernachricht zu speichern und einer Weiterleitungseinheit zum Ausgeben der Sprachspeichernachricht,
**dadurch gekennzeichnet,**
**dass** die Vorrichtung eine mit dem Sprachspeicher (2) verbundene Codiereinheit (3) zur Umwandlung der Sprachspeichernachricht in ein Datenpaket umfasst, wobei die Codiereinheit (3) mit einer Steuereinheit (4) zum Steuern der Codiereinheit gemäß einer Vorschrift verbunden ist.
